# EUROPÄISCHE PATENTSCHRIFT

(11) **EP 4 496 671 B1**
(45) Veröffentlichungstag und Bekanntmachung des Hinweises auf die Patenterteilung: **24.12.2025**
(21) Anmeldenummer: 23712857.4
(22) Anmeldetag: 17.03.2023
(51) Int. Cl.: B22D 2/00, B22D 17/30, B22D 17/32, B22D 18/08, B22D 39/02

(54) **VENTILVORRICHTUNG EINER DOSIERVORRICHTUNG ZUM DOSIEREN FLÜSSIGER METALLE**
VALVE DEVICE OF A DOSING DEVICE FOR DOSING LIQUID METALS
DISPOSITIF À VALVE D'UN DISPOSITIF DE DOSAGE POUR LE DOSAGE DE MÉTAUX LIQUIDES

(30) Priorität: 22.03.2022 DE 102022202774
(43) Veröffentlichungstag der Anmeldung: 29.01.2025
(73) Patentinhaber: VOLKSWAGEN AKTIENGESELLSCHAFT, 38440 Wolfsburg (DE)
(72) Erfinder: EREN, Erol, 34587 Felsberg (DE); KLEE, Michael, 34281 Gudensberg (DE); REINDEL, Klaus, 91058 Erlangen (DE); WÜST, Siegfried Heinrich, 34225 Baunatal (DE); WÖLLENSTEIN, Mirco, 34132 Kassel (DE); HÖRDLER, Matthias, 34125 Kassel (DE)
(86) Internationale Anmeldenummer: PCT/EP2023/056919
(87) Internationale Veröffentlichungsnummer: WO 2023/180204

(56) Entgegenhaltungen:
- "SelbsttÃ tige MetallzufÃ1?4hrung bei Kaltkammer- DruckgieÃ maschinen fÃ1?4r Magnesium", GIESSEREI,, vol. 50, no. 6, 21 March 1963 (1963-03-21), pages 167, XP001315430

## Beschreibung

Die vorliegende Erfindung betrifft eine Ventilvorrichtung einer Dosiervorrichtung zum Dosieren flüssiger Metalle, insbesondere für eine Druckgießanlage. Weiterhin betrifft die Erfindung eine Dosiervorrichtung zum Dosieren flüssiger Metalle, sowie eine Druckgießanlage.

Bekannt sind Druckgießanlagen, mittels welchen Metallbauteile aus flüssigem Metall, beispielsweise Aluminium, hergestellt werden können. Üblicherweise wird dabei flüssiges Metall, das sich in einer Gießkammer befindet, unter hohem Druck in eine Gießform gepresst, um das Metallbauteil herzustellen. Bevor das flüssige Metall in die Gießkammer zugeführt wird, ist dieses üblicherweise in einem Warmhalteofen gespeichert, in dem eine große Menge an flüssigem Metall aufgenommen werden kann, und beispielsweise durch Beheizen flüssig gehalten wird. Mittels einer Dosiervorrichtung wird das flüssige Metall aus dem Warmhalteofen entnommen und häufig über eine rohrförmige Dosierrinne der Gießkammer zugeführt. Zum genauen Dosieren des flüssigen Metalls weist die Dosiervorrichtung üblicherweise eine Ventilvorrichtung auf, um den Fluss der Schmelze freigeben und stoppen zu können. Aufgrund der aggressiven Umgebung, der eine solche Ventilvorrichtung ausgesetzt wird, ist üblicherweise eine sehr robuste und beständige Konstruktion der Ventilvorrichtung notwendig. Dadurch wird jedoch häufig die Dosiergenauigkeit eingeschränkt.

Eine bekannte Druckgießanlage ist im Dokument "Selbsttätige Metallzuführung bei Kaltkammer-Druckgießmaschinen für Magnesium", GIESSEREI,, Bd. 50, Nr. 6, 21 . März 1963 (1963-03-21), Seite 167, XP001315430, gezeigt.

Es ist daher eine Aufgabe der vorliegenden Erfindung, eine Ventilvorrichtung für eine Dosiervorrichtung zum Dosieren flüssiger Metalle bereitzustellen, die bei einfacher Konstruktion eine hohe Dosiergenauigkeit in der Anwendung beim Dosieren flüssiger Metalle ermöglicht. Ferner ist es eine Aufgabe der Erfindung, eine Dosiervorrichtung bereitzustellen, die ein Dosieren flüssiger Metalle mit hoher Genauigkeit ermöglicht. Weiterhin ist es eine Aufgabe vorliegender Erfindung, eine Druckgießanlage bereitzustellen, die geeignet ist, um Metallbauteile mit hoher Präzision und effizient fertigen zu können.

Die Aufgabe wird gelöst durch eine Ventilvorrichtung gemäß dem Anspruch 1, durch eine Dosiervorrichtung gemäß dem Anspruch 15, und durch eine Druckgießanlage gemäß dem Anspruch 21.

Die erfindungsgemäße Ventilvorrichtung umfasst einen Zylinder, welcher eine Einlassöffnung und eine Auslassöffnung und eine Dosieröffnung aufweist. Der Zylinder ist vorzugsweise als gerades Rohr ausgebildet. Zudem umfasst die Ventilvorrichtung einen Kolben, der innerhalb des Zylinders in Längsrichtung des Zylinders verschiebbar angeordnet ist, derart, dass der Kolben in eine erste Stellung und in eine zweite Stellung bringbar ist. Dabei ist der Kolben eingerichtet, um in der ersten Stellung eine Fluidverbindung zwischen der Einlassöffnung und der Auslassöffnung des Zylinders zu blockieren, und, insbesondere gleichzeitig, eine Fluidverbindung zwischen der Einlassöffnung und der Dosieröffnung freizugeben. Weiterhin ist der Kolben eingerichtet, um in der zweiten Stellung eine Fluidverbindung zwischen der Einlassöffnung und der Dosieröffnung des Zylinders zu blockieren, und, insbesondere gleichzeitig, eine Fluidverbindung zwischen der Dosieröffnung und der Auslassöffnung freizugeben.

Ferner weist der Kolben einen ersten Blockierabschnitt und einen zweiten Blockierabschnitt und einen Verbindungsabschnitt auf. Der erste Blockierabschnitt und der zweite Blockierabschnitt sind jeweils eingerichtet, um einen Zylinderquerschnitt des Zylinders vollständig zu blockieren. Das heißt, jeder Blockierabschnitt füllt den Zylinderquerschnitt im Inneren des Zylinders in einer Schnittebene senkrecht zur Längsrichtung vollständig aus. Der Verbindungsabschnitt verbindet dabei den ersten Blockierabschnitt und den zweiten Blockierabschnitt in Längsrichtung miteinander. Insbesondere ist der Verbindungsabschnitt somit entlang der Längsrichtung zwischen dem ersten Blockierabschnitt und den zweiten Blockierabschnitt angeordnet. Bevorzugt sind der erste Blockierabschnitt und der zweite Blockierabschnitt und der Verbindungsabschnitt gemeinsam als ein einstückiges Bauteil ausgebildet. Der Verbindungsabschnitt weist dabei einen Verbindungs-Querschnitt auf, insbesondere in der Schnittebene senkrecht zur Längsrichtung des Zylinders, der kleiner als der Zylinderquerschnitt ist. Dadurch kann eine einfache Konstruktion des Kolbens bereitgestellt werden, die das Dosieren des flüssigen Metalls über die Öffnungen des Zylinders besonders einfach und präzise ermöglicht. Beispielsweise kann der Kolben dabei derart ausgebildet sein, dass in der ersten Stellung die Einlassöffnung und die Dosieröffnung in Längsrichtung zwischen dem ersten Blockierabschnitt und dem zweiten Blockierabschnitt angeordnet sind, wobei die Auslassöffnung bzw. die Fluidverbindung zur Auslassöffnung durch den zweiten Blockierabschnitt blockiert ist. Dabei kann die Fluidverbindung zwischen der Einlassöffnung und der Dosieröffnung aufgrund des verringerten Verbindungs-Querschnitts des Verbindungsabschnitts über den Innenraum des Zylinders erfolgen. Analog kann der Kolben beispielsweise derart ausgebildet sein, dass in der zweiten Stellung die Dosieröffnung und die Auslassöffnung in Längsrichtung zwischen dem ersten Blockierabschnitt und dem zweiten Blockierabschnitt angeordnet sind, wobei die Einlassöffnung bzw. die Fluidverbindung zur Einlassöffnung durch den ersten Blockierabschnitt blockiert ist. Dabei kann analog zur ersten Stellung die Fluidverbindung zwischen der Dosieröffnung und der Auslassöffnung aufgrund des verringerten Verbindungs-Querschnitts über den Innenraum des Zylinders erfolgen.

Das heißt, es wird eine Ventilvorrichtung bereitgestellt, die drei in einem Zylinder angeordnete Öffnungen aufweist. Durch den Kolben, der innerhalb des Zylinders verschiebbar ist, können jeweils zwei dieser drei Öffnungen in Fluidverbindung miteinander gebracht werden. Dadurch kann durch Verschieben des Kolbens in eine der beiden Stellungen auf einfache Weise zwischen verschiedenen Fluidwegen umgeschaltet werden.

Die Ventilvorrichtung zeichnet sich dabei durch eine besonders einfache und kostengünstig herstellbare Konstruktion aus, welche sich einerseits für die Verwendung besonders beständiger Materialien für Kolben und/oder Zylinder eignet, und die andererseits zuverlässige und präzise Umschaltvorgänge zum Freigeben und Absperren von Fluidwegen ermöglicht. Insbesondere kann durch die Konstruktion mit dem verschiebbarem Kolben, der in den beiden Stellungen jeweils unterschiedliche Fluidverbindungen freigibt und blockiert, eine Möglichkeit zur besonders zuverlässig steuerbaren Betätigung sämtlicher Ventilstellungen bereitgestellt werden. Das heißt, jede der beiden Stellungen kann auf einfache Weise durch aktives Verschieben des Kolbens eingestellt werden, was sich dadurch auszeichnet, dass das flüssige Metall mit besonders hoher Präzision dosiert werden kann.

Vorteilhafterweise weisen sämtliche Öffnungen des Zylinders, also die Einlassöffnung und die Auslassöffnung und die Dosieröffnung, jeweils einen identischen Öffnungsquerschnitt auf.

Bevorzugt besteht der Zylinder aus einem geraden Hohlrohr. Das heißt, der Zylinder ist ausschließlich als ein gerades Rohr mit einem einzigen geraden zylindrischen Hohlraum im Inneren ausgebildet. Insbesondere ist der Zylinder als ein einwandiges Hohlrohr ausgebildet. Vorzugsweise weist das Hohlrohr über dessen gesamte Länge eine konstante Wandstärke auf. Dadurch kann eine besonders einfache und kostengünstige Konstruktion und Herstellung des Zylinders ermöglicht werden. Zudem ist es vorteilhaft, dass zuverlässig eine konstante Wärmeverteilung im Zylinder sowie in der darin befindlichen Schmelze bereitgestellt werden kann, was sich vorteilhaft auf eine gleichbleibende Gießqualität auswirkt. So wird beispielsweise eine schnelle und an allen Bereichen des Zylinders gleichmäßige Erwärmung möglich, wenn der Zylinder beispielsweise von Schmelze umgeben ist und/oder sich Schmelze innerhalb des Zylinders befindet.

Besonders bevorzugt ist der Zylinder mehrteilig ausgebildet, vorzugsweise aus mehreren miteinander verbundenen Rohrsegmenten. Beispielsweise können die Rohrsegmente zumindest teilweise ineinandergesteckt sein, wodurch ein einfacher und flexibler Zusammenbau des Zylinders möglich ist. Vorteilhafterweise können die Rohrsegmente zumindest teilweise identisch ausgebildet sein, wodurch eine besonders einfache und kostengünstige Herstellung des Zylinders ermöglicht wird. Beispielsweise können dabei die Einlassöffnung und/oder die Auslassöffnung und/oder die Dosieröffnung auf einfache Weise als Bohrungen in einer Wand des Rohrsegments hergestellt werden.

Vorzugsweise ist der Kolben als ein einzelnes einstückiges Bauteil ausgebildet. Mit anderen Worten ist ein einzelner einstückiger Kolben vorgesehen, der im Inneren des einzigen geraden zylindrischen Hohlraums im Zylinder angeordnet ist. Damit kann eine besonders einfache und kostengünstige Konstruktion und Herstellung der Ventilvorrichtung ermöglicht werden.

Bevorzugt ist die Einlassöffnung an einem in Längsrichtung stirnseitigen Ende des Zylinders angeordnet. Mit anderen Worten ist die Einlassöffnung durch ein stirnseitiges Ende, insbesondere eine stirnseitige Öffnung, des Zylinders gebildet. Dadurch kann eine besonders einfache und kostengünstige Konstruktion des Zylinders bereitgestellt werden, die beispielsweise eine geringe axiale Länge des Zylinders erlaubt.

Vorzugsweise ist die Einlassöffnung als eine Durchgangsöffnung, die eine Wand des Zylinders in radialer Richtung des Zylinders durchdringt, ausgebildet. Dadurch kann eine alternative Konstruktion des Zylinders bereitgestellt werden, die beispielsweise eine einfache Fertigung des Zylinders erlaubt.

Besonders bevorzugt sind die Auslassöffnung und die Durchgangsöffnung als Durchgangsöffnungen, die die Wand des Zylinders in radialer Richtung durchdringen, ausgebildet. Dadurch kann eine besonders einfache und kostengünstige Herstellbarkeit des Zylinders sichergestellt werden. Zudem kann das Freigeben und Blockieren der verschiedenen Fluidverbindungen in den beiden Stellungen des Kolbens auf einfache und zuverlässige Weise ermöglicht werden.

Weiter bevorzugt sind die Einlassöffnung und die Auslassöffnung und die Dosieröffnung an unterschiedlichen Positionen entlang der Längsrichtung des Zylinders angeordnet. Die Dosieröffnung ist dabei entlang der Längsrichtung des Zylinders zwischen der Einlassöffnung und der Auslassöffnung angeordnet. Dadurch kann bei einfacher und materialsparender Konstruktion der Ventilvorrichtung durch das Verschieben des Kolbens auf besonders einfache und Weise das Freigeben und Blockieren der jeweiligen Fluidverbindungen ermöglicht werden.

Besonders bevorzugt sind die Auslassöffnung und die Dosieröffnung bezüglich der Umfangsrichtung des Zylinders an derselben Position angeordnet, das heißt insbesondere sind jeweilige Öffnungsachsen der Auslassöffnung und der Dosieröffnung parallel zueinander. Im Falle dass die Einlassöffnung als Durchgangsöffnung durch die Wand des Zylinders in radialer Richtung ausgebildet ist, ist bevorzugt zusätzlich die Einlassöffnung an derselben Umfangsposition des Zylinders wie die Auslassöffnung und die Dosieröffnung angeordnet. Das heißt, sämtliche Öffnungen sind am Zylinder gleich ausgerichtet. Dadurch kann eine einfache Fertigung des Zylinders ermöglicht werden, und zudem kann eine vorteilhafte, platzsparende Anordnung des Zylinders in der Anwendung innerhalb einer Dosiervorrichtung ermöglicht werden, da beispielsweise ein Einströmen und Ausströmen von Schmelze jeweils auf der gleichen Seite des Zylinders stattfindet.

Vorzugsweise entspricht ein freier Dosier-Querschnitt zwischen dem Verbindungsabschnitt und einer Wand des Zylinders im Wesentlichen einem Öffnungs-Querschnitt der Einlassöffnung oder der Dosieröffnung oder der Auslassöffnung. Bevorzugt weisen Einlassöffnung, Auslassöffnung und Dosieröffnung jeweils einen identischen Öffnungs-Querschnitt auf. Besonders bevorzugt entspricht der Dosier-Querschnitt mindestens 80 %, vorzugsweise maximal 130 %, des Öffnungs-Querschnitts. Damit kann vorteilhafterweise sichergestellt werden, dass gleichmäßige freie Strömungsquerschnitte in der Ventilvorrichtung vorliegen, wodurch ein ungehinderter Fluss der Schmelze ermöglicht wird.

Bevorzugt weist der Verbindungs-Querschnitt maximal 70%, vorzugsweise maximal 50%, der Querschnittsfläche des Zylinder-Querschnitts auf.

Vorzugsweise umfasst die Ventilvorrichtung ferner ein Dosierrohr, das in der Auslassöffnung in den Zylinder mündet. Vorzugsweise ist das Dosierrohr fest mit dem Zylinder verbunden. Über das Dosierrohr kann beispielsweise das Weiterleiten des über die Verschiebung des Kolbens dosierbaren flüssigen Metalls erfolgen.

Besonders bevorzugt weist das Dosierrohr einen ersten Dosierrohrabschnitt auf, der sich in radialer Richtung des Zylinders von der Auslassöffnung des Zylinders weg erstreckt. Vorzugsweise weist das Dosierrohr zusätzlich einen zweiten Dosierrohrabschnitt auf, der parallel zum Zylinder angeordnet ist, und insbesondere mit dem ersten Dosierrohrabschnitt verbunden ist. Dadurch kann eine besonders einfache Konstruktion der Ventilvorrichtung bereitgestellt werden, wobei Zylinder und Dosierrohr beispielsweise vollständig aus geraden Rohren oder Rohrabschnitten bereitgestellt werden können. Besonders bevorzugt sind sowohl Dosierrohr als auch Zylinder jeweils aus mehreren miteinander verbundenen Rohrsegmenten gebildet, wobei sämtliche Rohrsegmente bevorzugt eine identische Geometrie aufweisen. Dadurch kann eine besonders einfache und kostengünstige Konstruktion und Herstellung der Ventilvorrichtung ermöglicht werden.

Bevorzugt ist die Ventilvorrichtung zumindest teilweise aus Keramik, vorzugsweise Siliziumkarbid, gebildet. Damit kann eine besonders hohe Beständigkeit der Ventilvorrichtung ermöglicht werden, welche sich beispielsweise für den Einsatz in flüssigen Aluminium eignet. Alternativ bevorzugt ist die Ventilvorrichtung dadurch geeignet für den Einsatz in flüssigem Magnesium.

Besonders bevorzugt ist die gesamte Ventilvorrichtung ausschließlich aus Keramik, insbesondere Siliziumkarbid, gebildet.

Vorzugsweise umfasst die Ventilvorrichtung ferner eine Betätigungsvorrichtung, welche eingerichtet ist zum ansteuerbaren Verschieben des Kolbens entlang der Längsrichtung des Zylinders. Bevorzugt weist die Betätigungsvorrichtung ein Pleuel, das mit dem Kolben verbunden ist und sich innerhalb des Zylinders entlang der Längsrichtung des Zylinders erstreckt, und ferner einen Motor, der eingerichtet ist, um das Pleuel entlang der Längsrichtung zu verschieben, auf. Beispielsweise kann die Betätigungsvorrichtung einen Linearmotor als Motor umfassen.

Weiterhin führt die Erfindung zu einer Dosiervorrichtung zum Dosieren flüssiger Metalle, insbesondere für eine Druckgießanlage. Die Dosiervorrichtung umfasst einen Dosierbehälter, der einen Dosierraum zur Aufnahme von flüssigem Metall aufweist. Zudem umfasst die Dosiervorrichtung die oben beschriebene Ventilvorrichtung. Dabei ist die Dosieröffnung der Ventilvorrichtung mit dem Dosierraum des Dosierbehälters fluidverbunden. Somit kann das im Dosierbehälter befindliche flüssige Metall mittels der Ventilvorrichtung einfach und effizient und mit hoher Präzision dosiert werden.

Bevorzugt ist die Ventilvorrichtung innerhalb des Dosierbehälters angeordnet. Der Dosierbehälter weist dabei eine Behälteröffnung auf, wobei die Einlassöffnung des Zylinders der Ventilvorrichtung mit der Behälteröffnung des Dosierbehälters in Fluidverbindung steht. Beispielsweise können Einlassöffnung und Behälteröffnung dabei gemeinsam als eine einzige Öffnung ausgebildet sein. Alternativ bevorzugt ragt der Zylinder durch die Behälteröffnung des Dosierbehälters hindurch. In diesem Fall liegt die Einlassöffnung bevorzugt außerhalb des Dosierbehälters, wobei insbesondere Dosieröffnung und Auslassöffnung des Zylinders innerhalb des Dosierbehälters liegen.

Vorzugsweise stehen der Dosierraum und die Behälteröffnung ausschließlich über den Zylinder in Fluidverbindung miteinander. Das heißt, eine Befüllung des Dosierraums mit Schmelze kann ausschließlich über die Ventilvorrichtung, im Detail über Einlassöffnung und Dosieröffnung des Zylinders, erfolgen.

Besonders bevorzugt ist die Behälteröffnung in einem Boden des Dosierbehälters angeordnet, bevorzugt als Durchgangsöffnung, die den Boden durchdringt, ausgebildet. Vorzugsweise ist der Zylinder vertikal, insbesondere oberhalb der Behälteröffnung oder zumindest teilweise durch die Behälteröffnung hindurchragend, angeordnet. Vorzugsweise ist der Zylinder dabei teilweise innerhalb der Behälteröffnung angeordnet, insbesondere in diese eingesteckt. Dadurch kann besonders vorteilhaft das ganze oder ein möglichst großer Teil des Volumens des Dosierbehälters zum Dosieren verwendet werden.

Vorzugsweise umfasst die Dosiervorrichtung ferner eine Druckeinrichtung, welche eingerichtet ist, um einen Unterdruck und/oder einen Überdruck innerhalb des Dosierraums zu erzeugen. Beispielsweise kann die Druckeinrichtung an einem Deckel des, vorzugsweise vollständig geschlossenen, Dosierbehälters angeordnet sein. Durch Erzeugen eines Unterdrucks kann der Dosierbehälter über die Ventilvorrichtung mit flüssigem Metall, beispielsweise aus einem den Dosierbehälter umgebenden Warmhalteofen, befüllt werden. Durch Erzeugen eines Überdrucks kann das flüssige Metall aus dem Dosierbehälter und über die Ventilvorrichtung ausgebracht, das heißt dosiert, werden. Bevorzugt ist die Druckeinrichtung außerhalb des Dosierbehälters angeordnet, wodurch ein Einsatz vielfältiger Arten an Druckeinrichtungen möglich ist.

Bevorzugt umfasst die Dosiervorrichtung ferner einen Füllstandssensor, welcher insbesondere an einem Deckel des Dosierbehälters angeordnet ist. Insbesondere ist der Füllstandssensor eingerichtet, um einen vollständig gefüllten Dosierbehälter erfassen zu können. Beispielsweise kann der Füllstandssensor zwei Elektroden umfassen, die vom Deckel in den Dosierraum hineinragen, wodurch ein besonders einfacher und kostengünstiger Füllstandssensor bereitgestellt werden kann. Vorzugsweise ist der Füllstandssensor eingerichtet, um die Druckeinrichtung in Abhängigkeit des Füllstands des Dosierbehälters zu betätigen, bevorzugt die Druckeinrichtung zu deaktivieren, wenn ein vollständig gefüllter Dosierbehälter erfasst wurde.

Bevorzugt ist der Füllstandssensor eingerichtet, um ein Signal in Abhängigkeit eines Füllstands des Dosierraums zu erzeugen. Besonders bevorzugt weist die Dosiervorrichtung ferner eine Steuereinrichtung auf, welche eingerichtet ist, um die Druckeinrichtung und/oder die Betätigungseinrichtung gesteuert zumindest teilweise in Abhängigkeit des Signals des Füllstandssensors zu betätigen. Damit kann ein gesteuertes, oder beispielsweise auch geregeltes, Dosieren der Schmelze mittels der Dosiervorrichtung erfolgen.

Weiterhin führt die Erfindung zu einer Druckgießanlage, insbesondere zum Druckgießen von flüssigen Metallen, bevorzugt Aluminium oder Magnesium. Die Druckgießanlage umfasst einen Warmhalteofen, der einen Aufnahmeraum zur Aufnahme von flüssigem Metall aufweist. Bevorzugt ist der Warmhalteofen eingerichtet zum Beheizen des Aufnahmeraums. Weiterhin umfasst die Druckgießanlage die beschriebene Dosiervorrichtung. Die Dosiervorrichtung ist dabei zumindest teilweise innerhalb des Aufnahmeraums des Warmhalteofens angeordnet. Insbesondere ist die Dosiervorrichtung zumindest teilweise innerhalb des flüssigen Metalls angeordnet, wenn der Aufnahmeraum mit flüssigem Metall gefüllt ist.

Bevorzugt ist die Behälteröffnung des Dosierbehälters vollständig innerhalb des Aufnahmeraums angeordnet. Das heißt, es kann Schmelze, die sich im Aufnahmeraum befindet, unmittelbar über die Behälteröffnung des Dosierbehälters aus dem Aufnahmeraum entnommen, das heißt dosiert, werden. Die Ventilvorrichtung der Dosiervorrichtung erlaubt dabei eine präzise Steuerung der Menge oder des Volumenstroms an dosierter Schmelze.

Bevorzugt umfasst die Druckgießanlage ferner eine Gießkammer und eine Dosierrinne. Die Dosierrinne ist eingerichtet zur Fluidverbindung der Dosiervorrichtung mit der Gießkammer. Dabei steht die Dosierrinne, vorzugsweise über ein Dosierrohr der Ventilvorrichtung, mit der Auslassöffnung des Zylinders der Ventilvorrichtung in Fluidverbindung. Die Dosierrinne ist ausgehend von der Dosiervorrichtung in Richtung zur Gießkammer in vertikaler Richtung ansteigend angeordnet. Mit anderen Worten kann die Gießkammer bezüglich der vertikalen Richtung höher angeordnet sein, als die Dosiervorrichtung wobei die Dosierrinne bezüglich der vertikalen Richtung zur Gießkammer hin ansteigend angeordnet ist. Durch die Ventilvorrichtung, welche ein präzises und zuverlässiges Absperren und Freigeben der Fluidströmungen erlaubt, kann dabei besonders zuverlässig ein Zurückfließen von flüssigem Metall zurück in den Dosierbehälter verhindert werden.

Weiter bevorzugt umfasst die Druckgießanlage ferner eine Schusseinrichtung, welche eingerichtet ist, um die Schmelze, welche mittels der Dosiervorrichtung dosiert wurde, in eine Gießform zu befördern. Bevorzugt ist die Gießkammer in diesem Fall Teil der Schusseinrichtung. Insbesondere weist die Schusseinrichtung dabei einen Schusskolben auf, welcher eingerichtet ist, um die dosierte Schmelze unter hohem Druck in die Gießform zu befördern. Beispielsweise kann der Schusskolben horizontal angeordnet sein. Insbesondere ist die Schusseinrichtung dabei als separate Vorrichtung zur Ventilvorrichtung ausgebildet. Vorzugsweise sind der Schusskolben und der Kolben der Ventilvorrichtung unabhängig voneinander bewegbar und/oder betätigbar ausgebildet. Das heißt, Schusskolben und Kolben der Ventilvorrichtung können vollständig voneinander unabhängig bewegt und betätigt werden. Insbesondere ist damit eine zeitversetzte Bewegung von Schusskolben und Kolben der Ventilvorrichtung möglich. Damit ist ein besonders flexibler Aufbau und Betrieb der Druckgießanlage möglich.

Im Folgenden wird die Erfindung anhand von Ausführungsbeispielen genauer erläutert. Hierzu zeigen:
- Figur 1: eine Schnittansicht einer Ventilvorrichtung gemäß einem ersten Ausführungsbeispiel der Erfindung,
- Figur 2: eine vereinfachte schematische Ansicht einer Druckgießanlage mit der Ventilvorrichtung der Figur 1 in einer ersten Stellung,
- Figur 3: eine vereinfachte schematische Ansicht der Druckgießanlage der Figur 2 mit der Ventilvorrichtung der Figur 1 in einer zweiten Stellung, und
- Figur 4: eine Schnittansicht einer Dosiervorrichtung mit einer Ventilvorrichtung gemäß einem zweiten Ausführungsbeispiel der Erfindung.

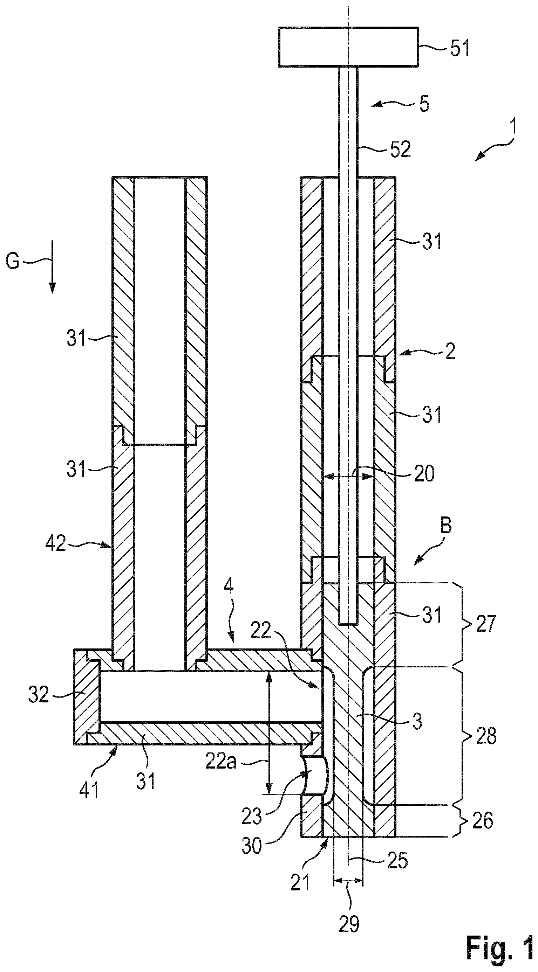

Im Folgenden werden bevorzugte Ausführungsbeispiele einer erfindungsgemäßen Ventilvorrichtung 1 näher beschrieben. Dabei wird auf die Figuren 1 bis 4 Bezug genommen. Gleiche bzw. funktional gleiche Bauteile sind stets mit denselben Bezugszeichen versehen.

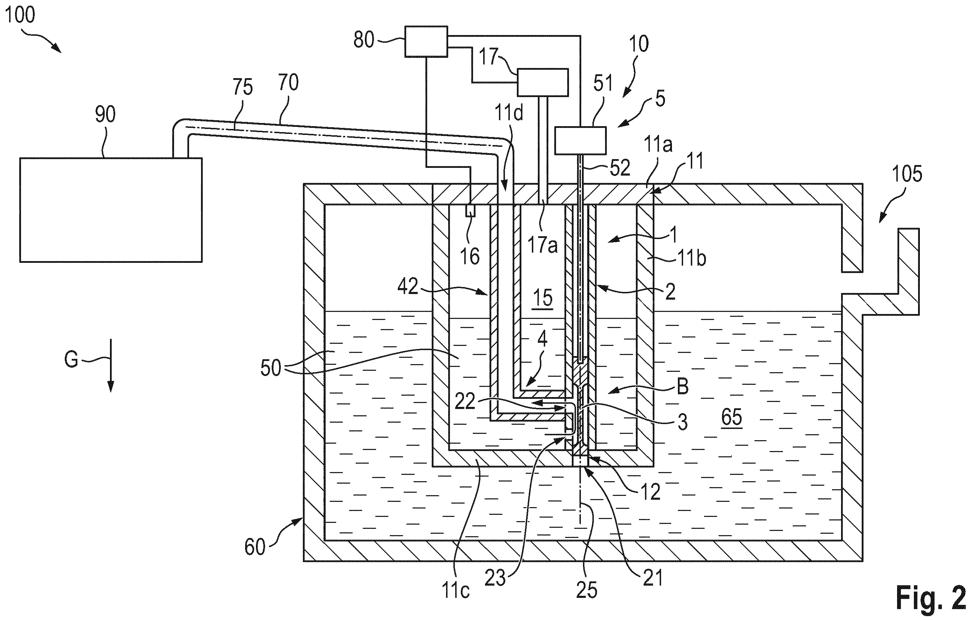

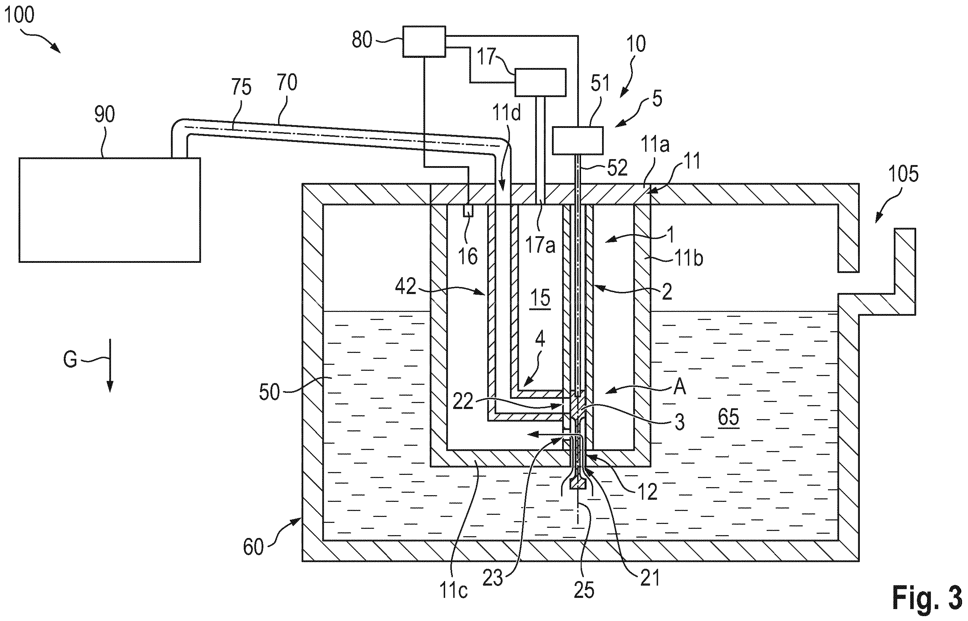

Figur 1 zeigt eine Schnittansicht einer Ventilvorrichtung 1 gemäß einem ersten Ausführungsbeispiel der Erfindung. Die Ventilvorrichtung 1 ist eingerichtet zur Verwendung in einer Dosiervorrichtung 10 zum Dosieren flüssiger Metalle 50 in einer Druckgießanlage 100, die später in Bezug auf die Figuren 2 und 3 im Detail beschrieben.

Die Ventilvorrichtung 1 umfasst einen Zylinder 2, der insbesondere als gerades Rohr ausgebildet ist, und der sich entlang einer Längsrichtung 25 erstreckt. Bevorzugt ist der Zylinder 2 aus mehreren entlang der Längsrichtung 25 unmittelbar aneinandergrenzenden Rohrsegmenten 31 zusammengesetzt, welche insbesondere teilweise ineinandergesteckt sind, um einen einfachen und flexiblen Zusammenbau des Zylinders 2 zu ermöglichen.

Der Zylinder 2 weist eine Einlassöffnung 21, eine Auslassöffnung 22, und eine Dosieröffnung 23 auf. Bevorzugt weisen die Einlassöffnung 21, die Auslassöffnung 22, und die Dosieröffnung 23 gleiche Querschnittsflächen auf.

Die Einlassöffnung 21 ist durch ein in Längsrichtung 25 stirnseitiges Ende des Zylinders 2 gebildet.

Die Auslassöffnung 22 und die Dosieröffnung 23 sind als Durchgangsöffnungen, die eine Wand 30 des Zylinders 2 in radialer Richtung durchdringen ausgebildet. Dabei sind die Auslassöffnung 22 und die Dosieröffnung 23 an unterschiedlichen Positionen entlang der Längsrichtung 25 des Zylinders angeordnet. Die Dosieröffnung 23 ist dabei entlang der Längsrichtung 25 zwischen der Einlassöffnung 21 und der Auslassöffnung 22 angeordnet.

Die Ventilvorrichtung 1 umfasst ferner ein Dosierrohr 4, welches in der Auslassöffnung 22 in den Innenraum des Zylinders 2 mündet. Das Dosierrohr 4 umfasst einen ersten Dosierrohrabschnitt 41, der sich in radialer Richtung des Zylinders 2 von der Auslassöffnung 22 erstreckt, und insbesondere teilweise in die Wand 30 des Zylinders 2 eingesteckt ist. Zudem umfasst das Dosierrohr 4 einen zweiten Dosierrohrabschnitt 42, der parallel zum Zylinder 2 angeordnet ist. Bevorzugt sind der erste Dosierrohrabschnitt 41 und/oder der zweite Dosierrohrabschnitt 42 ebenfalls als gerade Rohrsegmente 31 ausgebildet, die insbesondere teilweise ineinandergesteckt sind. Insbesondere ist der Dosierrohrabschnitt 41 an einer dem Zylinder 2 abgewandten Stirnseite mittels eines Deckels 32 verschlossen.

Zudem umfasst die Ventilvorrichtung 1 einen Kolben 3, der innerhalb des Zylinders 2 und entlang der Längsrichtung 25 des Zylinders 2 verschiebbar angeordnet ist.

Zur Verschiebung des Kolbens 3 umfasst die Ventilvorrichtung 1 eine Betätigungsvorrichtung 5, mittels welcher der Kolben 2 ansteuerbar verschoben werden kann. Die Betätigungsvorrichtung 5 umfasst dabei ein Pleuel 52, das mit dem Kolben 3 verbunden ist und das in den Zylinder 2 hineinragt. Außerhalb des Zylinders 2 ist zudem ein Motor 51 der Betätigungsvorrichtung 5 angeordnet, der eingerichtet ist zum ansteuerbaren Verschieben des Pleuels 52 entlang der Längsrichtung 25.

Der Kolben 2 der Ventilvorrichtung 1 umfasst einen ersten Blockierabschnitt 26 und einen zweiten Blockierabschnitt 27. Beide Blockierabschnitte 26, 27 sind jeweils eingerichtet, um einen Zylinderquerschnitt 20 im Inneren des Zylinders 2 vollständig zu blockieren. Insbesondere ist jeder der beiden Blockierabschnitte 26, 27 zumindest teilweise als Vollzylinder ausgebildet mit einem Außendurchmesser, der dem Innendurchmesser des Zylinders 2 entspricht.

Zudem umfasst der Kolben 2 einen Verbindungsabschnitt 28, der den ersten Blockierabschnitt 26 und den zweiten Blockierabschnitt 27 entlang der Längsrichtung 27 miteinander verbindet. Bevorzugt ist der Verbindungsabschnitt 28 zumindest teilweise als gerader Zylinder ausgebildet, der sich entlang der Längsrichtung 25 erstreckt. Der erste Blockierabschnitt 26, der zweite Blockierabschnitt 27, und der Verbindungsabschnitt 28 sind dabei gemeinsam als ein einstückiges Bauteil ausgebildet. Der Verbindungsabschnitt 28 weist einen Verbindungs-Querschnitt 29 auf, der kleiner als der Zylinderquerschnitt 20 ist. Bevorzugt ist ein Verhältnis des Verbindungs-Querschnitts 29 und des Zylinderquerschnitts 20 zueinander derart ausgebildet, dass eine Querschnittsfläche des freien ringförmigen Hohlraums 35 zwischen Verbindungsabschnitt 28 und Wand 30 des Zylinders 2 mindestens 50 % der Querschnittsfläche von Einlassöffnung 21 oder Auslassöffnung 22 oder Dosieröffnung 23 beträgt.

Eine axiale Länge des Verbindungsabschnitts 28 ist vorzugsweise größer oder gleich eines maximalen Außenabstands 22a von Auslassöffnung 22 und Dosieröffnung 23 entlang der Längsrichtung 25.

Die Ventilvorrichtung 1 ist vollständig aus Keramik, bevorzugt Siliziumkarbid, gebildet, um eine Beständigkeit gegenüber flüssigen Metallen, wie beispielsweise Aluminium, bieten zu können.

Der Kolben 3 kann durch die Verschiebung mittels der Betätigungsvorrichtung 5 in eine erste Stellung A und in eine zweite Stellung B gebracht werden. Dabei kann eine Fluidverbindung zwischen der Dosieröffnung 23 und entweder der Auslassöffnung 22 oder der Einlassöffnung 21 bereitgestellt werden, wobei eine Fluidverbindung zwischen den jeweils anderen Öffnungen blockiert wird. Die genaue Funktionsweise der Ventilvorrichtung 1 in den beiden Stellungen A, B sowie die Verwendung der Ventilvorrichtung 1 wird nachfolgend in Bezug auf die Figuren 2 und 3 im Detail beschrieben.

Figur 2 zeigt eine vereinfachte schematische Schnittansicht einer Druckgießanlage 100 mit der Ventilvorrichtung 1 der Figur 1. Die Druckgießanlage 100 umfasst einen Warmhalteofen 60 mit einem Aufnahmeraum 65, in dem flüssiges Metall 50 aufgenommen, und beispielsweise für die spätere Verwendung beim Druckgießen gespeichert werden kann. Beispielsweise kann das flüssige Metall 50 über eine Einfüllöffnung 105 in den Aufnahmeraum 65 des Warmhalteofens 60 eingefüllt werden.

Zudem umfasst die Druckgießanlage 100 eine Dosiervorrichtung 10, mittels welcher das flüssige Metall 50 aus dem Aufnahmeraum 65 entnommen und dosiert werden kann. Dabei kann das flüssige Metall 50 von der Dosiervorrichtung 10 über eine Dosierrinne 70, welche beispielsweise im Wesentlichen rohrförmig ausgebildet sein kann, einer Gießkammer 90 zugeführt werden. Von der Gießkammer 90 aus kann die entsprechend dosierte Menge an flüssigem Metall für den Druckgießvorgang verwendet werden.

Bevorzugt weist die Druckgießanlage 100 ferner eine (nicht dargestellte) Schusseinrichtung auf, welche eingerichtet ist, die dosierte Schmelze unter hohem Druck in eine Gießform zu befördern. Die Gießkammer 90 ist in diesem Fall Teil der Schusseinrichtung. Dabei weist die Schusseinrichtung zudem einen Schusskolben auf, der die Schmelze in die Gießform befördern kann. Der Schusskolben kann bevorzugt horizontal angeordnet sein. Der Schusskolben und der Kolben 2 sind dabei unabhängig voneinander betätigbar ausgebildet und können damit zeitversetzt betrieben werden.

Die Dosiervorrichtung 10 umfasst einen Dosierbehälter 11, der einen Dosierraum 15 aufweist, in dem flüssiges Metall aufgenommen werden kann. Beispielsweise kann in dem Dosierraum 15 eine entsprechende Menge an flüssigem Metall für den jeweiligen Druckgießvorgang aufgenommen werden. Ein Behälter 11b des Dosierbehälters 11 ist dabei innerhalb des Aufnahmeraums 65 angeordnet und teilweise in das flüssige Metall 50 eingetaucht.

Die Ventilvorrichtung 1 ist innerhalb des Dosierbehälters 11, also im Dosierraum 15 angeordnet. Dabei steht die Einlassöffnung 21 des Zylinders 2 mit einer Behälteröffnung 12 in einem Boden 11c des Dosierbehälters 11 in Fluidverbindung. Insbesondere sind die Behälteröffnung 12 und der Zylinder 2 fluchtend angeordnet.

Die Ventilvorrichtung 1 ist dabei derart angeordnet, dass die Längsrichtung 25 des Zylinders 2 vertikal, das heißt parallel zu einer Gravitationsrichtung G angeordnet ist.

Ein oberes Ende des Zylinders 2 ist bevorzugt an einem Deckel 11a des Dosierbehälters 11 befestigt. Das Pleuel 52 der Betätigungsvorrichtung 5 ragt bevorzugt durch den Deckel 11a des Dosierbehälters 11, wobei der Motor 51 außerhalb des Dosierbehälters 11 angeordnet ist.

Die Dosieröffnung 23 des Zylinders 11 mündet in das Innere des Dosierbehälters 11.

Das Dosierrohr 4 ist über eine Austrittsöffnung 11d im Deckel 11a des Dosierbehälters 11 in Fluidverbindung mit der Dosierrinne 70.

Weiterhin umfasst die Dosiervorrichtung 10 eine Druckeinrichtung 17, welche eingerichtet ist, um einen Unterdruck und einen Überdruck innerhalb des Dosierraums 15 zu erzeugen. Die Druckeinrichtung 17 ist dabei insbesondere außerhalb des Dosierbehälters 11 angeordnet und steht über eine Drucköffnung 17a im Deckel 11a mit dem Dosierraum 15 in Fluidverbindung.

Figur 2 zeigt einen Zustand während des Dosierens des flüssigen Metalls 50, das heißt während das sich im Dosierraum 15 befindliche flüssige Metall über die Dosierrinne 70 der Gießkammer 90 zugeführt wird. Dabei befindet sich der Kolben 3 der Ventilvorrichtung 1 in der zweiten Stellung B (vgl. auch Figur 1).

In der zweiten Stellung B befindet sich der erste Blockierabschnitt 26 (vgl. Figur 1) des Kolbens 3 zwischen der Einlassöffnung 21 und der Dosieröffnung 23, sodass eine Fluidverbindung zwischen der Einlassöffnung 21 und der Dosieröffnung 23 blockiert ist. Gleichzeitig ist in dieser zweiten Stellung B über den verringerten Verbindungs-Querschnitt 29 des Verbindungsabschnitts 28 eine Fluidverbindung zwischen der Dosieröffnung 23 und der Auslassöffnung 22 freigegeben. Dadurch kann das flüssige Metall 50 aus dem Dosierraum 15 über den Innenraum des Zylinders 2 in das Dosierrohr 4 einströmen und von diesem über die Austrittsöffnung 11d in die Dosierrinne 70 und in die Gießkammer 90. Gleichzeitig wird durch den zweiten Blockierabschnitt 27 (vgl. Figur 1) verhindert, dass das flüssige Metall 50 im Inneren des Zylinders 2 nach oben steigen kann.

Um das Dosieren des Metalls 50 gezielt zu fördern, wird mittels der Druckeinrichtung 17 ein Überdruck innerhalb des Dosierraums 15 erzeugt, während sich der Kolben 3 in der zweiten Stellung B befindet.

In Figur 3 ist die Druckgießanlage 100 der Figur 2 während des Befüllens des Dosierbehälters 11 dargestellt. Während dieses Vorgangs befindet sich der Kolben 3 der Ventilvorrichtung 1 in der ersten Stellung A.

In der ersten Stellung A ist der erste Blockierabschnitt 26 des Kolbens 3 entlang der Längsrichtung 25 nach unten aus der Einlassöffnung 21 sowie der Behälteröffnung 12 herausgeschoben. Insbesondere ist der Kolben 3 in eine derartige Stellung verschoben, dass sich in Längsrichtung 25 die Dosieröffnung 23 und die Einlassöffnung 21 zwischen dem ersten Blockierabschnitt 26 und dem zweiten Blockierabschnitt 27 befinden. Insbesondere befindet sich eine Unterseite des zweiten Blockierabschnitts 27 bezüglich der vertikalen Längsrichtung 25 unterhalb der Auslassöffnung 22 des. Dadurch wird eine Fluidverbindung zur Auslassöffnung 22 vollständig blockiert, wodurch ein Zurückfließen der Schmelze aus dem Dosierrohr 4 in den Dosierraum 15 zuverlässig verhindert wird. Gleichzeitig kann über den verringerten Verbindungs-Querschnitt 29 des Verbindungsabschnitts 28 flüssiges Metall 50 aus dem Aufnahmeraum 65 in den Dosierraum 15 einströmen, um den Dosierbehälter 11 zu befüllen.

Um das Befüllen des Dosierbehälters 11 zu fördern, wird mittels der Druckeinrichtung 17 ein Unterdruck innerhalb des Dosierraums 15 erzeugt, während sich der Kolben 3 in der ersten Stellung A befindet.

Das Befüllen des Dosierbehälters 11 kann basierend auf einem Signal eines Füllstandssensors 16 gestoppt werden. Der Füllstandssensor 16 ist dabei im Inneren des Dosierbehälters 11 am Deckel 11a des Dosierbehälters 11 angeordnet und ragt in den Dosierraum 15 hinein. Beim Befüllen des Dosierraums 15 steigt die Schmelze in Richtung des Deckels 11a, bis diese den Füllstandssensor 16 berührt. Basierend darauf kann erkannt werden, dass der Dosierraum 15 vollständig gefüllt ist.

Die Dosiervorrichtung 10 umfasst dabei ferner eine Steuereinrichtung 80, welche die Druckeinrichtung 17 und die Betätigungsvorrichtung 5 gesteuert zumindest teilweise in Abhängigkeit des Signals des Füllstandssensor 16 betätigt.

Die erfindungsgemäße Ventilvorrichtung 1 bietet den Vorteil, dass mit besonders einfachem und kostengünstigem Aufbau eine sehr präzise und zuverlässige Steuerung der Fluidströmung des flüssigen Metalls 50 vom Warmhalteofen 60 zur Gießkammer 90 ermöglicht werden kann. Dabei kann nicht nur besonders gezielt und präzise der Start des Dosierens, also das Fließen der Schmelze aus dem Dosierraum 15 in Richtung der Gießkammer 90, freigegeben werden, sondern auch besonders zuverlässig ein Zurückfließen der Schmelze in den Dosierraum 15 verhindert werden. Dadurch ist es vorteilhafterweise möglich, die Dosierrinne 70 ausgehend von der Austrittsöffnung 11d des Dosierbehälters 11 in Richtung zur Gießkammer 90 hin bezüglich der Gravitationsrichtung G ansteigend anzuordnen. Dadurch ist es möglich, die Oberseite von Dosiervorrichtung 10 und Warmhalteofen 60 abzusenken, das heißt niedriger anzuordnen, wodurch eine gesamte Bauhöhe der Druckgießanlage 100 reduziert werden kann.

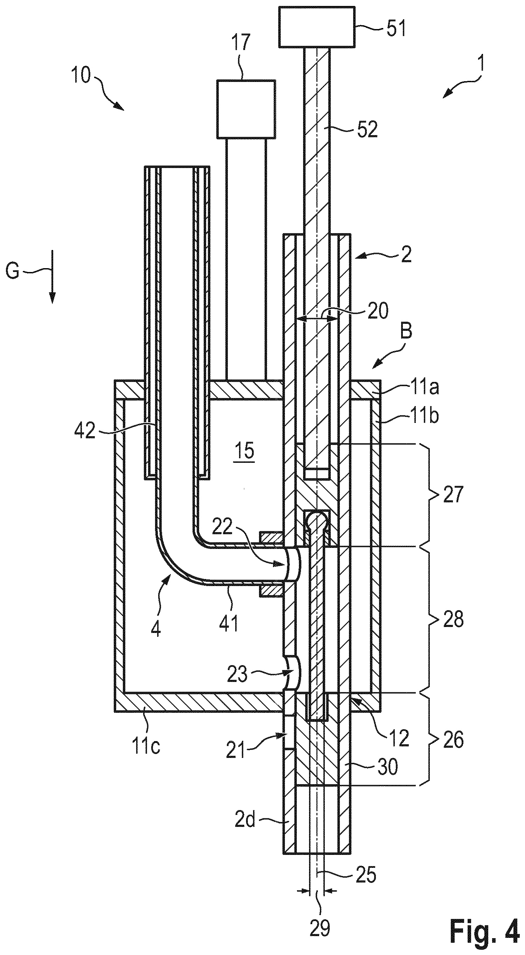

Figur 4 zeigt einen Schnittansicht einer Dosiervorrichtung 10 mit einer Ventilvorrichtung 1 gemäß einem zweiten Ausführungsbeispiel der Erfindung. Das zweite Ausführungsbeispiel entspricht im Wesentlichen dem ersten Ausführungsbeispiel der Figuren 1 bis 3, mit dem Unterschied einer alternativen Ausgestaltung des Zylinders 2.

Im zweiten Ausführungsbeispiel der Figur 4 ist der Zylinder 2 derart ausgebildet, dass dieser durch die Behälteröffnung 12 im Boden 11c des Dosierbehälters 11 hindurchragt. Die Einlassöffnung 21 ist dabei als Durchgangsöffnung, die die Wand 30 des Zylinders 2 in radialer Richtung durchdringt, ausgebildet. Hierbei befindet sich die Einlassöffnung 21 außerhalb des Dosierbehälters 11. Mit anderen Worten ist der Boden 11c des Dosierbehälters 11 zwischen der Einlassöffnung 21 und der Dosieröffnung 23 angeordnet. Dadurch kann eine alternative Konstruktion der Ventilvorrichtung 1 bereitgestellt werden, welche beispielsweise einfach zu fertigen ist und für alternative Platzverhältnisse im Warmhalteofen 60 geeignet ist.

In der Figur 4 ist dabei ähnlich der Figur 1 der Kolben 2 in der zweiten Stellung B dargestellt. In analoger Weise zum ersten Ausführungsbeispiel wird im zweiten Ausführungsbeispiel der Figur 4 der Kolben 3 durch Verschieben entlang der Längsrichtung 25 nach unten, insbesondere so weit, bis sich die Einlassöffnung 21 und die Dosieröffnung 23 zwischen dem ersten Blockierabschnitt 26 und dem zweiten Blockierabschnitt 27 befinden, in die erste Stellung A gebracht.

### Bezugszeichenliste

- 1: Ventilvorrichtung
- 2: Zylinder
- 2 d: Verlängerung
- 3: Kolben
- 4: Dosierrohr
- 5: Betätigungsvorrichtung
- 10: Dosiervorrichtung
- 11: Dosierbehälter
- 11a: Deckel
- 11b: Behälter
- 11c: Boden
- 11d: Austrittsöffnung
- 12: Behälteröffnung
- 15: Dosierraum
- 16: Füllstandssensor
- 17: Druckeinrichtung
- 17a: Drucköffnung
- 20: Zylinderquerschnitt
- 21: Einlassöffnung
- 22: Auslassöffnung
- 23: Dosieröffnung
- 25: Längsrichtung
- 26: erster Blockierabschnitt
- 27: zweiter Blockierabschnitt
- 28: Verbindungsabschnitt
- 29: Verbindungs-Querschnitt
- 30: Wand
- 31: Rohrsegment
- 32: Deckel
- 35: Hohlraum
- 41: erster Dosierabschnitt
- 42: zweiter Dosierabschnitt
- 50: flüssiges Metall
- 51: Motor
- 52: Pleuel
- 60: Warmhalteofen
- 65: Aufnahmeraum
- 70: Dosierrinne
- 75: Längsachse
- 80: Steuereinrichtung
- 90: Gießkammer
- 100: Druckgießanlage
- 105: Einfüllöffnung

- A: erste Stellung
- B: zweite Stellung
- G: Gravitationsrichtung

## Patentansprüche

1. Ventilvorrichtung einer Dosiervorrichtung (10) zum Dosieren flüssiger Metalle (50), insbesondere für eine Druckgießanlage (100), umfassend:
- einen Zylinder (2), der eine Einlassöffnung (21), eine Auslassöffnung (22), und eine Dosieröffnung (23) aufweist, und
- einen Kolben (3) der im Zylinder (2) in Längsrichtung (25) des Zylinders (2) verschiebbar angeordnet ist, sodass der Kolben (3) in eine erste Stellung (A) und in eine zweite Stellung (B) bringbar ist,
- wobei der Kolben (3) eingerichtet ist, in der ersten Stellung (A) eine Fluidverbindung zwischen der Einlassöffnung (21) und der Auslassöffnung (22) zu blockieren und eine Fluidverbindung zwischen der Einlassöffnung (21) und der Dosieröffnung (22) freizugeben, und
- wobei der Kolben (3) eingerichtet ist, in der zweiten Stellung (B) eine Fluidverbindung zwischen der Einlassöffnung (21) und der Dosieröffnung (23) zu blockieren und eine Fluidverbindung zwischen der Dosieröffnung (23) und der Auslassöffnung (22) freizugeben,
wobei der Kolben (2) einen ersten Blockierabschnitt (26) und einen zweiten Blockierabschnitt (27) und einen Verbindungabschnitt (28) aufweist, wobei der erste Blockierabschnitt (26) und der zweite Blockierabschnitt (27) jeweils eingerichtet sind, um einen Zylinderquerschnitt (20) des Zylinders (2) vollständig zu blockieren, wobei der Verbindungsabschnitt (28) den ersten Blockierabschnitt (26) und den zweiten Blockierabschnitt (27) miteinander verbindet, und wobei der Verbindungsabschnitt (28) einen Verbindungs-Querschnitt (29) aufweist, der kleiner als der Zylinderquerschnitt (20) ist.

2. Ventilvorrichtung nach Anspruch 1, wobei der Zylinder (2) aus einem geraden Hohlrohr besteht.

3. Ventilvorrichtung nach einem der vorhergehenden Ansprüche, wobei der Kolben (3) als ein einzelnes einstückiges Bauteil ausgebildet ist.

4. Ventilvorrichtung nach einem der vorhergehenden Ansprüche, wobei die Einlassöffnung (21) an einem in Längsrichtung (25) stirnseitigen Ende des Zylinders (2) angeordnet ist.

5. Ventilvorrichtung nach einem der Ansprüche 1 bis 3, wobei die Einlassöffnung (21) als Durchgangsöffnung, die eine Wand (30) des Zylinders (3) in radialer Richtung durchdringt, ausgebildet ist.

6. Ventilvorrichtung nach einem der vorhergehenden Ansprüche, wobei die Auslassöffnung (22) und die Dosieröffnung (23) als Durchgangsöffnungen, die die Wand (30) des Zylinders (2) in radialer Richtung durchdringen, ausgebildet sind.

7. Ventilvorrichtung nach Anspruch 6, wobei die Einlassöffnung (21) und die Auslassöffnung (22) und die Dosieröffnung (23) an unterschiedlichen Positionen entlang der Längsrichtung (25) des Zylinders (2) angeordnet sind, und wobei die Dosieröffnung (23) in Längsrichtung (25) des Zylinders (2) zwischen der Einlassöffnung (21) und der Auslassöffnung (22) angeordnet ist.

8. Ventilvorrichtung nach einem der vorhergehenden Ansprüche, wobei die Dosieröffnung (23) und die Auslassöffnung (21) an derselben Umfangsposition des Zylinders (2) angeordnet sind.

9. Ventilvorrichtung nach einem der vorhergehenden Ansprüche, wobei ein freier Dosier-Querschnitt zwischen dem Verbindungsabschnitt (28) und einer Wand (30) des Zylinders (2) im Wesentlichen einem Öffnungs-Querschnitt der Einlassöffnung (21) oder der Auslassöffnung (22) oder der Dosieröffnung (23), vorzugsweise mindestens 80 % und insbesondere maximal 130 % des Öffnungs-Querschnitts, entspricht.

10. Ventilvorrichtung nach einem der vorhergehenden Ansprüche, ferner umfassend ein Dosierrohr (4), das in der Auslassöffnung (22) in den Zylinder (2) mündet.

11. Ventilvorrichtung nach Anspruch 10, wobei das Dosierrohr (4) einen ersten Dosierrohrabschnitt (41), der sich in radialer Richtung des Zylinders (2) von der Auslassöffnung (22) erstreckt, und einen zweiten Dosierrohrabschnitt (42), der parallel zum Zylinder (2) angeordnet ist, aufweist.

12. Ventilvorrichtung nach einem der vorhergehenden Ansprüche, wobei die Ventilvorrichtung (1) zumindest teilweise aus Keramik, insbesondere Siliziumkarbid, gebildet ist.

13. Ventilvorrichtung nach Anspruch 12, wobei die Ventilvorrichtung (1) ausschließlich aus Keramik, insbesondere Siliziumkarbid, gebildet ist.

14. Ventilvorrichtung nach einem der vorhergehenden Ansprüche, ferner umfassend eine Betätigungsvorrichtung (5), welche eingerichtet ist zum ansteuerbaren Verschieben des Kolbens (2) entlang der Längsrichtung (25) des Zylinders (2).

15. Dosiervorrichtung zum Dosieren flüssiger Metalle (50), insbesondere für eine Druckgießanlage (100), umfassend:
- einen Dosierbehälter (11), der einen Dosierraum (15) zur Aufnahme von flüssigem Metall (50) aufweist, und
- eine Ventilvorrichtung (1) nach einem der vorhergehenden Ansprüche, wobei die Dosieröffnung (22) der Ventilvorrichtung (1) mit dem Dosierraum (15) des Dosierbehälters (11) fluidverbunden ist.

16. Dosiervorrichtung nach Anspruch 15, wobei die Ventilvorrichtung (1) innerhalb des Dosierbehälters (11) angeordnet ist, wobei der Dosierbehälter (11) eine Behälteröffnung (12) aufweist, und wobei die Einlassöffnung (21) des Zylinders (2) mit der Behälteröffnung (12) des Dosierbehälters (11) in Fluidverbindung steht, oder wobei der Zylinder (2) durch die Behälteröffnung (12) des Dosierbehälters (11) hindurchragt.

17. Dosiervorrichtung nach Anspruch 16, wobei der Dosierraum (15) und die Behälteröffnung (12) ausschließlich über den Zylinder (2) in Fluidverbindung miteinander stehen.

18. Dosiervorrichtung nach Anspruch 16 oder 17, wobei die Behälteröffnung (12) in einem Boden (11c) des Dosierbehälters (11) angeordnet ist, insbesondere wobei der Zylinder (2) vertikal, vorzugsweise teilweise innerhalb der Behälteröffnung (12), angeordnet ist.

19. Dosiervorrichtung nach einem der Ansprüche 15 bis 18, ferner umfassend eine Druckeinrichtung (17), welche eingerichtet ist, um einen Unterdruck und/oder einen Überdruck innerhalb des Dosierraums (15) zu erzeugen.

20. Dosiervorrichtung nach einem der Ansprüche 15 bis 19, ferner umfassend:
- einen Füllstandssensor (16), der eingerichtet ist, ein Signal in Abhängigkeit eines Füllstands des Dosierraums (15) zu erzeugen, und
- eine Steuereinrichtung 80, welche eingerichtet ist, die Druckeinrichtung (17) und/oder die Betätigungsvorrichtung (5) gesteuert zumindest teilweise in Abhängigkeit des Signals des Füllstandssensors (16) zu betätigen.

21. Druckgießanlage, umfassend:
- einen Warmhalteofen (60) mit einem Aufnahmeraum (65) zur Aufnahme von flüssigem Metall, und
- eine Dosiervorrichtung (10) nach einem der Ansprüche 15 bis 20, wobei die Dosiervorrichtung (10) zumindest teilweise innerhalb des Aufnahmeraums (65) des Warmhalteofens (60) angeordnet ist.

22. Druckgießanlage nach Anspruch 21, wobei die Behälteröffnung (12) des Dosierbehälters (11) vollständig innerhalb des Aufnahmeraums (65) angeordnet ist.

23. Druckgießanlage nach Anspruch 21 oder 22, ferner umfassend:
- eine Gießkammer (90), und
- eine Dosierrinne (70), welche eingerichtet ist, zur Fluidverbindung der Dosiervorrichtung (10) mit der Gießkammer (90), wobei die Dosierrinne (70), insbesondere über ein Dosierrohr (4) der Ventilvorrichtung (1), mit der Auslassöffnung (22) des Zylinders (2) der Ventilvorrichtung (1) in Fluidverbindung steht, und wobei die Dosierrinne (70) ausgehend von der Dosiervorrichtung (10) in Richtung zur Gießkammer (90) in vertikaler Richtung ansteigend angeordnet ist.

24. Druckgießanlage nach einem der Ansprüche 21 bis 23, ferner umfassend eine Schusseinrichtung, welche eingerichtet ist, insbesondere mittels eines Schusskolbens, eine mittels der Dosiervorrichtung (10) dosierte Schmelze in eine Gießform zu befördern.

## Claims

1. Valve apparatus of a dosing apparatus (10) for dosing liquid metals (50), in particular for a die casting system (100), comprising:
- a cylinder (2) having an inlet opening (21), an outlet opening (22), and a dosing opening (23), and
- a piston (3) which is arranged in the cylinder (2) so as to be displaceable in the longitudinal direction (25) of the cylinder (2), such that the piston (3) can be brought into a first position (A) and into a second position (B),
- wherein the piston (3) is designed, in the first position (A), to block a fluidic connection between the inlet opening (21) and the outlet opening (22) and to enable a fluidic connection between the inlet opening (21) and the dosing opening (22), and
- wherein the piston (3) is designed, in the second position (B), to block a fluidic connection between the inlet opening (21) and the dosing opening (23) and to enable a fluidic connection between the dosing opening (23) and the outlet opening (22),
wherein the piston (2) comprises a first blocking portion (26) and a second blocking portion (27) and a connecting portion (28), wherein the first blocking portion (26) and the second blocking portion (27) are each designed to completely block a cylinder cross-section (20) of the cylinder (2), wherein the connecting portion (28) interconnects the first blocking portion (26) and the second blocking portion (27), and wherein the connecting portion (28) has a connecting cross-section (29) that is smaller than the cylinder cross-section (20).

2. Valve apparatus according to claim 1, wherein the cylinder (2) consists of a straight hollow tube.

3. Valve apparatus according to any of the preceding claims, wherein the piston (3) is formed as a single, one-piece component.

4. Valve apparatus according to any of the preceding claims, wherein the inlet opening (21) is arranged at a front end of the cylinder (2) in the longitudinal direction (25).

5. Valve apparatus according to any of claims 1 to 3, wherein the inlet opening (21) is designed as a through-opening which penetrates through a wall (30) of the cylinder (3) in the radial direction.

6. Valve apparatus according to any of the preceding claims, wherein the outlet opening (22) and the dosing opening (23) are designed as through-openings which penetrate through the wall (30) of the cylinder (2) in the radial direction.

7. Valve apparatus according to claim 6, wherein the inlet opening (21) and the outlet opening (22) and the dosing opening (23) are arranged at different positions along the longitudinal direction (25) of the cylinder (2), and wherein the dosing opening (23) is arranged between the inlet opening (21) and the outlet opening (22) in the longitudinal direction (25) of the cylinder (2).

8. Valve apparatus according to any of the preceding claims, wherein the dosing opening (23) and the outlet opening (21) are arranged at the same circumferential position of the cylinder (2).

9. Valve apparatus according to any of the preceding claims, wherein a free dosing cross-section between the connecting portion (28) and a wall (30) of the cylinder (2) substantially corresponds to an opening cross-section of the inlet opening (21) or the outlet opening (22) or the dosing opening (23), preferably to at least 80%, and in particular to a maximum of 130%, of the opening cross-section.

10. Valve apparatus according to any of the preceding claims, further comprising a dosing tube (4) which opens into the cylinder (2) in the outlet opening (22).

11. Valve apparatus according to claim 10, wherein the dosing tube (4) comprises a first dosing tube portion (41) extending in the radial direction of the cylinder (2) from the outlet opening (22), and a second dosing tube portion (42) arranged parallel to the cylinder (2).

12. Valve apparatus according to any of the preceding claims, wherein the valve apparatus (1) is formed at least partially from ceramic, in particular silicon carbide.

13. Valve apparatus according to claim 12, wherein the valve apparatus (1) is formed exclusively from ceramic, in particular silicon carbide.

14. Valve apparatus according to any of the preceding claims, further comprising an actuating apparatus (5) which is designed for the controllable displacement of the piston (2) along the longitudinal direction (25) of the cylinder (2).

15. Dosing apparatus for dosing liquid metals (50), in particular for a die casting system (100), comprising:
- a dosing container (11) having a dosing chamber (15) for receiving liquid metal (50), and
- a valve apparatus (1) according to any of the preceding claims, wherein the dosing opening (22) of the valve apparatus (1) is fluidically connected to the dosing chamber (15) of the dosing container (11).

16. Dosing apparatus according to claim 15, wherein the valve apparatus (1) is arranged within the dosing container (11), wherein the dosing container (11) has a container opening (12), and wherein the inlet opening (21) of the cylinder (2) is fluidically connected to the container opening (12) of the dosing container (11), or wherein the cylinder (2) projects through the container opening (12) of the dosing container (11).

17. Dosing apparatus according to claim 16, wherein the dosing chamber (15) and the container opening (12) are fluidically interconnected, exclusively via the cylinder (2).

18. Dosing apparatus according to claim 16 or 17, wherein the container opening (12) is arranged in a base (11c) of the dosing container (11), in particular wherein the cylinder (2) is arranged vertically, preferably partially within the container opening (12).

19. Dosing apparatus according to any of claims 15 to 18, further comprising a pressure device (17) which is designed to generate a negative pressure and/or an overpressure within the dosing chamber (15).

20. Dosing apparatus according to any of claims 15 to 19, further comprising:
- a fill level sensor (16) which is designed to generate a signal depending on a fill level of the dosing chamber (15), and
- a control device 80 which is designed to actuate the pressure device (17) and/or the actuating apparatus (5) in a controlled manner, at least partially depending on the signal from the fill level sensor (16).

21. Die casting system, comprising:
- a holding furnace (60) having a receiving space (65) for receiving liquid metal, and
- a dosing apparatus (10) according to any of claims 15 to 20, wherein the dosing apparatus (10) is arranged at least partially within the receiving space (65) of the holding furnace (60).

22. Die casting system according to claim 21, wherein the container opening (12) of the dosing container (11) is arranged completely within the receiving space (65).

23. Die casting system according to claim 21 or claim 22, further comprising:
- a casting chamber (90), and
- a dosing channel (70) which is designed for fluidic connection of the dosing apparatus (10) to the casting chamber (90), wherein the dosing channel (70), in particular via a dosing tube (4) of the valve apparatus (1), is in fluidic connection with the outlet opening (22) of the cylinder (2) of the valve apparatus (1), and wherein the dosing channel (70) is arranged so as to rise vertically from the dosing apparatus (10) in the direction of the casting chamber (90).

24. Die casting system according to any of claims 21 to 23, further comprising a shooting device which is designed, in particular by means of a shooting piston, to convey a melt dosed by means of the dosing apparatus (10) into a casting mold.

## Revendications

1. Dispositif de soupape d'un dispositif de dosage (10) pour le dosage de métaux liquides (50), en particulier pour une installation de coulée sous pression (100), comprenant :
- un cylindre (2) qui présente un orifice d'entrée (21), un orifice de sortie (22), et un orifice de dosage (23), et
- un piston (3) qui est agencé dans le cylindre (2) de manière à pouvoir être déplacé dans la direction longitudinale (25) du cylindre (2), de sorte que le piston (3) peut être amené dans une première position (A) et dans une seconde position (B),
- dans lequel le piston (3) est conçu, dans la première position (A), pour bloquer une liaison fluidique entre l'orifice d'entrée (21) et l'orifice de sortie (22) et pour libérer une liaison fluidique entre l'orifice d'entrée (21) et l'orifice de dosage (22), et
- dans lequel le piston (3) est conçu, dans la seconde position (B), pour bloquer une liaison fluidique entre l'orifice d'entrée (21) et l'orifice de dosage (23) et pour libérer une liaison fluidique entre l'orifice de dosage (23) et l'orifice de sortie (22),
dans lequel le piston (2) présente une première section de blocage (26) et une seconde section de blocage (27) et une section de liaison (28), dans lequel la première section de blocage (26) et la seconde section de blocage (27) sont respectivement conçues pour bloquer complètement une section transversale de cylindre (20) du cylindre (2), dans lequel la section de liaison (28) relie la première section de blocage (26) et la seconde section de blocage (27) l'une à l'autre, et dans lequel la section de liaison (28) présente une section transversale de liaison (29) qui est inférieure à la section transversale de cylindre (20).

2. Dispositif de soupape selon la revendication 1, dans lequel le cylindre (2) est constitué d'un tube creux droit.

3. Dispositif de soupape selon l'une des revendications précédentes, dans lequel le piston (3) est réalisé sous la forme d'un composant unique monobloc.

4. Dispositif de soupape selon l'une des revendications précédentes, dans lequel l'orifice d'admission (21) est agencé à une extrémité côté frontal du cylindre (2) dans la direction longitudinale (25).

5. Dispositif de soupape selon l'une des revendications 1 à 3, dans lequel l'orifice d'entrée (21) est réalisé sous la forme d'un orifice traversant qui traverse une paroi (30) du cylindre (3) dans la direction radiale.

6. Dispositif de soupape selon l'une des revendications précédentes, dans lequel l'orifice de sortie (22) et l'orifice de dosage (23) sont réalisés sous la forme d'orifices traversants qui traversent la paroi (30) du cylindre (2) dans la direction radiale.

7. Dispositif de soupape selon la revendication 6, dans lequel l'orifice d'entrée (21) et l'orifice de sortie (22) et l'orifice de dosage (23) sont agencés à des positions différentes le long de la direction longitudinale (25) du cylindre (2), et dans lequel l'orifice de dosage (23) est agencé dans la direction longitudinale (25) du cylindre (2) entre l'orifice d'entrée (21) et l'orifice de sortie (22).

8. Dispositif de soupape selon l'une des revendications précédentes, dans lequel l'orifice de dosage (23) et l'orifice de sortie (21) sont agencés dans la même position périphérique du cylindre (2).

9. Dispositif de soupape selon l'une des revendications précédentes, dans lequel une section de dosage libre entre la section de liaison (28) et une paroi (30) du cylindre (2) correspond sensiblement à une section transversale d'orifice de l'orifice d'entrée (21) ou de l'orifice de sortie (22) ou de l'orifice de dosage (23), de préférence au moins à 80 % et en particulier au maximum à 130 % de la section transversale d'orifice.

10. Dispositif de soupape selon l'une des revendications précédentes, comprenant en outre un tube de dosage (4) qui débouche dans le cylindre (2) dans l'orifice de sortie (22).

11. Dispositif de soupape selon la revendication 10, dans lequel le tube de dosage (4) présente une première section de tube de dosage (41) qui s'étend dans la direction radiale du cylindre (2) à partir de l'orifice de sortie (22), et une seconde section de tube de dosage (42) agencée parallèlement au cylindre (2).

12. Dispositif de soupape selon l'une des revendications précédentes, dans lequel le dispositif de soupape (1) est formé au moins en partie de céramique, en particulier de carbure de silicium.

13. Dispositif de soupape selon la revendication 12, dans lequel le dispositif de soupape (1) est formé exclusivement de céramique, en particulier de carbure de silicium.

14. Dispositif de soupape selon l'une des revendications précédentes, comprenant en outre un dispositif d'actionnement (5) qui est conçu pour déplacer de manière commandable le piston (2) le long de la direction longitudinale (25) du cylindre (2).

15. Dispositif de dosage pour le dosage de métaux liquides (50), en particulier pour une installation de coulée sous pression (100), comprenant :
- un récipient de dosage (11), qui présente un espace de dosage (15) pour la réception du métal liquide (50), et
- un dispositif de soupape (1) selon l'une des revendications précédentes, dans lequel l'orifice de dosage (22) du dispositif de soupape (1) est en liaison fluidique avec la chambre de dosage (15) du réservoir de dosage (11).

16. Dispositif de dosage selon la revendication 15, dans lequel le dispositif de soupape (1) est agencé à l'intérieur du récipient de dosage (11), dans lequel le récipient de dosage (11) présente un orifice de récipient (12), et dans lequel l'orifice d'entrée (21) du cylindre (2) est en liaison fluidique avec l'orifice de récipient (12) du récipient de dosage (11), ou dans lequel le cylindre (2) traverse l'orifice de récipient (12) du récipient de dosage (11).

17. Dispositif de dosage selon la revendication 16, dans lequel la chambre de dosage (15) et l'orifice de récipient (12) sont en liaison fluidique l'un avec l'autre exclusivement par l'intermédiaire du cylindre (2).

18. Dispositif de dosage selon la revendication 16 ou 17, dans lequel l'orifice de récipient (12) est agencé dans un fond (11c) du récipient de dosage (11), en particulier dans lequel le cylindre (2) est agencé verticalement, de préférence partiellement à l'intérieur de l'orifice de récipient (12).

19. Dispositif de dosage selon l'une des revendications 15 à 18, comprenant en outre un dispositif de pression (17) qui est conçu pour générer une dépression et/ou une surpression à l'intérieur de l'espace de dosage (15).

20. Dispositif de dosage selon l'une des revendications 15 à 19, comprenant en outre :
- un capteur de niveau de remplissage (16) qui est conçu pour générer un signal en fonction d'un niveau de remplissage de l'espace de dosage (15), et
- un dispositif de commande 80 qui est conçu pour actionner le dispositif de pression (17) et/ou le dispositif d'actionnement (5) de manière commandée au moins partiellement en fonction du signal du capteur de niveau de remplissage (16).

21. Installation de coulée sous pression, comprenant :
- un four de maintien en température (60) comportant un espace de réception (65) pour la réception de métal liquide, et
- un dispositif de dosage (10) selon l'une des revendications 15 à 20, dans laquelle le dispositif de dosage (10) est agencé au moins partiellement à l'intérieur de l'espace de réception (65) du four de maintien en température (60).

22. Installation de coulée sous pression selon la revendication 21, dans laquelle l'orifice de récipient (12) du récipient de dosage (11) est agencé entièrement à l'intérieur de l'espace de réception (65).

23. Installation de coulée sous pression selon la revendication 21 ou 22, comprenant en outre :
- une chambre de coulée (90), et
- une goulotte de dosage (70) qui est conçue pour la liaison fluidique du dispositif de dosage (10) avec la chambre de coulée (90), dans laquelle la goulotte de dosage (70) est en liaison fluidique avec l'orifice de sortie (22) du cylindre (2) du dispositif de soupape (1), en particulier par l'intermédiaire d'un tube de dosage (4) du dispositif de soupape (1), et dans laquelle la goulotte de dosage (70) est agencée en montant dans le sens vertical à partir du dispositif de dosage (10) en direction de la chambre de coulée (90).

24. Installation de coulée sous pression selon l'une des revendications 21 à 23, comprenant en outre un dispositif de tir qui est conçu pour transporter, en particulier par le biais d'un piston de tir, une masse fondue dosée par le biais du dispositif de dosage (10) dans un moule de coulée.
